# FASCICULE DE BREVET EUROPEEN

(11) **EP 3 774 282 B1**
(45) Date de publication et mention de la délivrance du brevet: **07.02.2024**
(21) Numéro de dépôt: 19712811.9
(22) Date de dépôt: 29.03.2019
(51) Int. Cl.: B29C 64/112

(54) **PROCÉDÉ DE FABRICATION ADDITIVE D'UNE PIÈCE EN ÉLASTOMÈRE, INSTALLATION DE FABRICATION ET PIÈCE ASSOCIÉES**
VERFAHREN ZUR GENERATIVEN FERTIGUNG EINES ELASTOMERTEILS UND ZUGEHÖRIGE PRODUKTIONSANLAGE UND TEIL
METHOD FOR THE ADDITIVE MANUFACTURING OF AN ELASTOMER PART, AND ASSOCIATED PRODUCTION FACILITY AND PART

(30) Priorité: 29.03.2018 FR 1852749
(43) Date de publication de la demande: 17.02.2021
(73) Titulaire: Association pour les Transferts de Technologies du Mans, 72000 Le Mans (FR)
(72) Inventeur: LEROUX, Cécile, 72540 Crannes-en-Champagne (FR); LERAT, Alexandre, 72100 Le Mans (FR); DORGET, Michel, 72000 Le Mans (FR)
(74) Mandataire: Lavoix
(86) Numéro de dépôt international: PCT/EP2019/058059
(87) Numéro de publication internationale: WO 2019/185895

(56) Documents cités:
- WO-A1-2004/018212
- WO-A1-2017/108071

## Description

La présente invention concerne un procédé de fabrication additive d'une pièce en élastomère, du type comprenant les étapes suivantes : création d'un premier modèle informatique comprenant des coordonnées spatiales de ladite pièce en élastomère ; puis dépôt, conformément auxdites coordonnées spatiales, d'au moins un premier matériau élastomère ; ledit dépôt étant effectué en plusieurs couches sensiblement planes, empilées verticalement ; l'étape de création du premier modèle informatique comprenant une définition des coordonnées spatiales de chacune desdites couches de premier matériau.

Il est connu de réaliser des pièces souples, par exemple des prototypes, au moyen de procédés de fabrication additive ou impression 3D. Le document US20160185040 décrit par exemple la fabrication d'une pièce par dépôt de fil chaud de caoutchouc cru, suivi d'une vulcanisation. Le document WO2017/108071A1 décrit un procédé selon le préambule de la revendication 1.

L'utilisation du caoutchouc cru ne permet pas d'obtenir un dépôt d'une grande précision. La Demanderesse a donc étudié la réalisation de prototypes souples à partir d'une composition liquide à base de latex, c'est-à-dire d'une suspension de polymères dans une base aqueuse.

Cependant, la viscosité du latex empêche l'utilisation de dispositifs connus de dépôts de liquides, telles que les imprimantes à encre. Par ailleurs, le dépôt à une température trop élevée peut conduire à une vulcanisation prématurée du polymère.

A cet effet, l'invention a pour objet un procédé de fabrication additive du type précité, dans lequel : l'au moins un premier matériau élastomère est déposé sous forme d'une composition liquide à base de latex ; et le dépôt est effectué par formation de gouttes de composition liquide et éjection sous pression desdites gouttes.

Suivant d'autres aspects avantageux de l'invention, le procédé comporte l'une ou plusieurs des caractéristiques suivantes, prises isolément ou suivant toutes les combinaisons techniquement possibles :
- la composition liquide à base de latex comprend une dispersion de polymères dans une base aqueuse, ladite composition liquide comprenant au moins 40% en poids d'eau et entre 30% et 70% en poids de polymères ;
- l'au moins un premier matériau élastomère est un caoutchouc naturel ou synthétique ;
- les gouttes de composition liquide ont un volume compris entre 0,1 nL et 1000 nL, préférentiellement compris entre 0,25 nL et 1,00 nL et plus préférentiellement compris entre 0,40 nL et 0,60 nL ;
- chaque couche sensiblement plane a une épaisseur comprise entre 10 µm et 100 µm et plus préférentiellement comprise entre 30 µm et 70 µm ;
- le procédé comprend des étapes de séchage alternées avec les étapes de dépôt des couches d'au moins un premier matériau élastomère, chaque étape de séchage conduisant à une évaporation au moins partielle de la base aqueuse de l'une desdites couches et à la formation d'une surface solide sur ladite couche, ladite surface solide étant apte à supporter la couche suivante d'au moins un premier matériau élastomère ;
- le procédé comprend les étapes suivantes : création d'un deuxième modèle informatique, comprenant des coordonnées spatiales d'un support de la pièce en élastomère ; puis dépôt, conformément auxdites coordonnées spatiales, d'au moins un deuxième matériau dudit support ; ledit dépôt étant effectué en plusieurs couches sensiblement planes, empilées verticalement ; l'étape de création du deuxième modèle informatique comprenant une définition des coordonnées spatiales de chacune desdites couches de deuxième matériau, chaque couche d'au moins un deuxième matériau étant sensiblement coplanaire avec au moins une couche de premier matériau ;
- les dépôts de couches sensiblement coplanaires d'au moins un premier et d'au moins un deuxième matériaux sont sensiblement simultanés ;
- la composition liquide à base de latex comprend en outre au moins un additif de vulcanisation ; et le procédé comprend ensuite une étape de vulcanisation de l'au moins un premier matériau élastomère.

L'invention se rapporte en outre à une installation de fabrication additive comprenant : un premier dispositif de distribution d'au moins un premier matériau élastomère ; un dispositif de déplacement dudit premier dispositif de distribution ; un module électronique de gestion desdits dispositifs ; et des moyens de mise en oeuvre d'un procédé de fabrication tel que décrit ci-dessus.

Suivant d'autres aspects avantageux de l'invention, l'installation comporte l'une ou plusieurs des caractéristiques suivantes, prises isolément ou suivant toutes les combinaisons techniquement possibles :
- le premier dispositif de distribution de l'au moins un premier matériau élastomère comprend une tête de distribution et un réservoir de composition liquide à base de latex, relié à ladite tête, le réservoir étant en surpression par rapport à la pression atmosphérique, la tête de distribution comprenant : un orifice d'éjection communiquant avec le réservoir ; et un pointeau apte à se rapprocher et s'éloigner dudit orifice d'éjection dans un mouvement oscillant, de sorte à projeter sous pression les gouttes de la composition liquide hors dudit orifice d'éjection ;
- l'installation comprend en outre un deuxième dispositif de distribution de l'au moins un deuxième matériau ;
- l'installation comprend en outre au moins un organe de séchage.

L'invention se rapporte en outre à une pièce en élastomère issue d'un procédé de fabrication tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une représentation schématique d'une installation selon un mode de réalisation de l'invention ;
- la figure 2 est une vue partielle, en coupe, de l'installation de la figure 1 ; et
- la figure 3 est une vue partielle, en coupe, d'une étape d'un procédé selon un mode de réalisation de l'invention, mis en oeuvre à l'aide de l'installation de la figure 1.

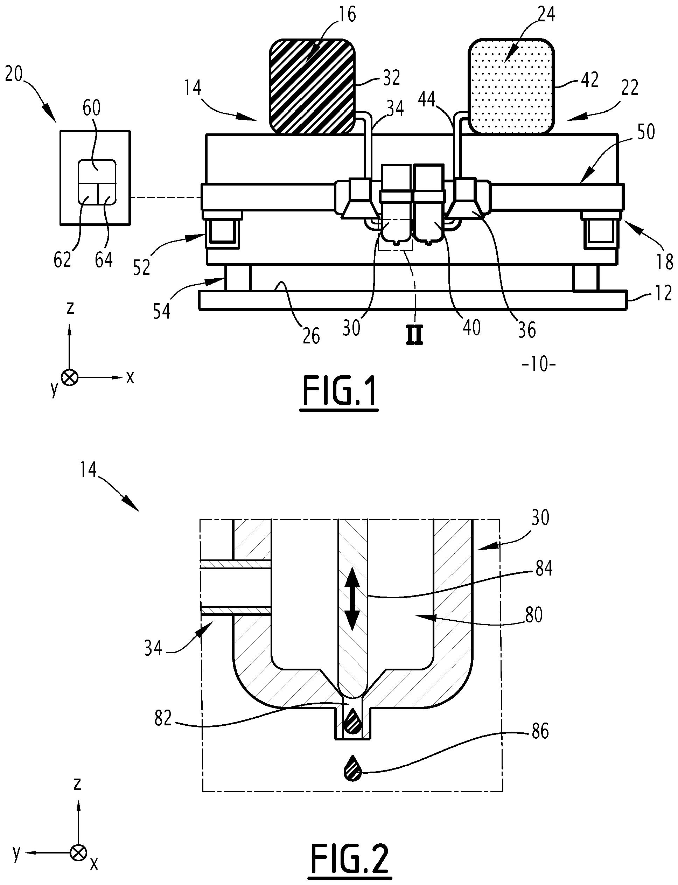

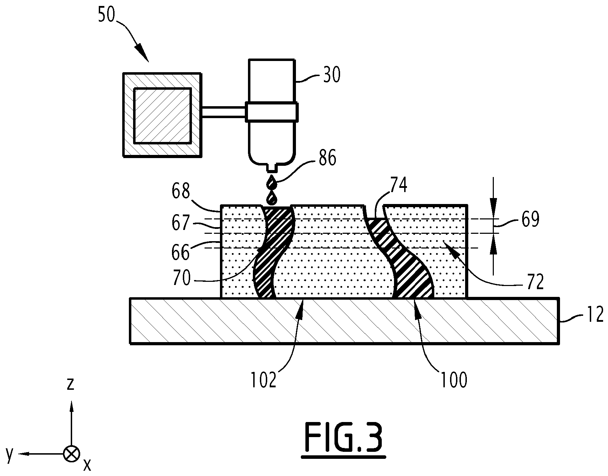

La figure 1 représente une installation 10 pour la réalisation d'une pièce en élastomère par fabrication additive. Plus précisément, l'installation 10 est destinée à la réalisation d'une pièce 100 (figure 3) en un matériau de type caoutchouc, naturel ou synthétique.

L'installation 10 comporte : un plateau 12 de fabrication ; un premier dispositif 14 de distribution d'au moins un premier matériau élastomère 16 ; un dispositif 18 de déplacement dudit premier dispositif de distribution 14 ; et un module électronique 20 de gestion desdits dispositifs 14, 18. Dans le mode de réalisation représenté, l'installation 10 comporte en outre un deuxième dispositif 22 de distribution d'au moins un deuxième matériau support 24.

Le plateau 12 comporte une surface 26 sensiblement plane, destinée à recevoir les matériaux 16, 24 de fabrication. Dans une position de fonctionnement de l'installation 10, ladite surface 26 est sensiblement horizontale et orientée vers le haut.

La surface 26 présente par exemple un contour sensiblement rectangulaire. Dans la suite de la description, on considère une base orthonormée (X, Y, Z), la direction Z représentant la verticale et les directions X et Y étant parallèles à des bords de la surface 26.

Le premier dispositif de distribution 14 est configuré pour distribuer au moins un premier matériau élastomère 16 pour la fabrication de la pièce 100. A cet effet, le premier dispositif de distribution 14 comporte : une tête de distribution 30, un réservoir 32 de premier matériau élastomère 16 et un conduit 34 reliant ledit réservoir à ladite tête. La tête de distribution 30, le réservoir 32 et le conduit 34 seront décrits plus en détail ci-après.

Selon un mode de réalisation non représenté, le premier dispositif de distribution 14 est configuré pour distribuer plusieurs matériaux élastomères pour la fabrication de la pièce 100. A cet effet, le dispositif de distribution comporte par exemple plusieurs réservoirs remplis de matériaux différents, lesdits réservoirs étant reliés à une même tête de distribution ou chaque réservoir étant relié à une tête distincte.

Le premier matériau élastomère 16, tel que contenu dans le réservoir 32 et distribué par la tête de distribution 30, est une composition liquide à base de latex, comprenant une dispersion, stable au niveau colloïdal, de polymères dans une base aqueuse.

Selon un mode de réalisation, la composition liquide 16 est formée à partir d'un latex naturel, extrait d'une plante tel que l'hévéa, le guayule ou le pissenlit. Selon ce mode de réalisation, la composition liquide 16 est notamment riche en polyisoprènes.

Selon un autre mode de réalisation, la composition liquide 16 comporte des polymères d'origine synthétique, tels que des copolymères styrène-butadiène, styrène-acrylique ou des polymères fluorés tel que le PTFE.

Préférentiellement, la composition liquide 16 comprend entre 30% et 70%, et plus préférentiellement entre 50% et 60%, en masse de polymères par rapport à la masse totale de la composition. De préférence, une granulométrie des polymères est comprise entre 100 nm et 1 µm. Toutefois, des nano-polymères de granulométrie inférieure à 100 nm peuvent également être utilisés.

Préférentiellement, la composition liquide 16 comprend au moins 40% d'eau par rapport à la masse totale de la composition, de sorte à en limiter la viscosité. Préférentiellement, la viscosité de la composition liquide 16 est comprise entre 10 mPa.s et 400.000 mPa.s, et plus préférentiellement comprise entre 100 mPa.s et 10.000 mPa.s.

Selon un mode de réalisation, la composition liquide 16 comprend en outre un ou plusieurs additifs permettant une vulcanisation du caoutchouc, tels que des composés sulfurés.

Selon un mode de réalisation, la composition liquide 16 comprend en outre un ou plusieurs autres additifs tels que des colorants.

Dans le mode de réalisation non représenté où le premier dispositif de distribution est apte à distribuer plusieurs matériaux élastomères, lesdits matériaux sont de préférence chimiquement compatibles. De préférence, les plusieurs réservoirs sont remplis de compositions liquides analogues, qui se différencient par exemple par des colorants différents.

La figure 2 montre une vue de détail, en coupe, du premier dispositif de distribution 14, et en particulier de la tête de distribution 30 et du conduit 34.

La tête de distribution 30 comporte une chambre d'éjection 80, reliée au réservoir 32 de composition liquide 16 par l'intermédiaire du conduit 34. Le réservoir 32 est en surpression par rapport à la pression atmosphérique, ladite surpression étant comprise entre 0,1 bar et 49 bars et plus préférentiellement comprise entre 0,5 bar et 3 bars.

La chambre d'éjection communique avec l'extérieur de la tête de distribution 30 par un orifice d'éjection 82. Ledit orifice d'éjection 82 a un diamètre préférentiellement compris entre 50 µm et 600 µm.

La tête de distribution 30 comporte en outre un pointeau 84 disposé dans la chambre d'éjection. Le pointeau 84 est apte à se rapprocher et s'éloigner de l'orifice d'éjection 82 dans un mouvement oscillant de translation selon Z, de sorte à projeter sous pression des gouttes 86 de la composition liquide 16 hors dudit orifice d'éjection. Le pointeau 84 est par exemple relié à un élément piézo-électrique (non représenté) qui se déforme sous une impulsion électrique.

Les gouttes 86 ont des dimensions microscopiques, préférentiellement un diamètre compris entre 80 µm et 120 µm environ, et plus préférentiellement de l'ordre de 100 µm. La taille des gouttes est exagérée sur les figures 2 et 3.

De telles dimensions de gouttes permettent une grande précision pour le dépôt de la composition liquide 16. Les gouttes 86 ont un volume compris entre 0,1 nL et 1000 nL, préférentiellement compris entre 0,25 nL et 1 nL, plus préférentiellement compris entre 0,40 nL et 0,60 nL et encore plus préférentiellement de l'ordre de 0,5 nL.

La mise sous pression permet de former et d'éjecter des gouttes à partir d'un liquide visqueux, tel que la composition liquide 16. Par comparaison, des têtes d'impression classiques de type jet d'encre thermique ou piézoélectrique ne permettent pas de mettre le liquide sous pression. L'éjection d'un liquide de la gamme de viscosité de la composition liquide 16 est alors problématique, voire impossible. Par ailleurs, les technologies impliquant un chauffage du liquide conduisent à des vulcanisations intempestives du latex.

De préférence, la tête de distribution 30 est de type « valve de jetting ». De telles têtes de distribution sont par exemple commercialisées par les sociétés Nordson, Vermes, Marco, Advanjet ou PVA.

De préférence, le premier dispositif de distribution 14 comporte en outre un ou plusieurs organes de séchage 36. Un tel organe de séchage comprend par exemple un élément de chauffage par rayonnement infrarouge, ou un élément de soufflage d'air chauffé ou non.

Le deuxième dispositif de distribution 22 est configuré pour distribuer au moins un deuxième matériau support 24 durant la fabrication de la pièce 100. Comme il sera décrit ci-après, le deuxième matériau support 24 est destiné à la réalisation d'un support 102 (figure 3) simultanément à la réalisation de la pièce 100. A cet effet, le deuxième dispositif de distribution 22 comporte : une tête de distribution 40, un réservoir 42 de deuxième matériau support 24 et un conduit 44 reliant ledit réservoir à ladite tête.

Le deuxième matériau support 24, tel que contenu dans le réservoir 42 et distribué par la tête de distribution 40, est de préférence une composition fluide. Par « fluide », on entend une composition liquide ou visqueuse. Le deuxième matériau support 24 est par exemple un polymère soluble, avantageusement hydrosoluble. Préférentiellement, le deuxième matériau support 24 est choisi parmi les polymères de type glycol, tels que les polyéthylènes glycols (PEG), les Polyacétates de Vinyl (PVA), les acides Polylactiques (PLA).

Le dispositif de déplacement 18 est apte à déplacer dans les trois directions X, Y, Z la ou les têtes de distribution 30 du premier dispositif de distribution 14, ainsi que la tête de distribution 40 du deuxième dispositif de distribution 22.

Le dispositif de déplacement 18 comporte par exemple plusieurs actionneurs linéaires 50, 52, 54, aptes à déplacer lesdites têtes de distribution 30, 40, respectivement dans les directions X, Y et Z. Les actionneurs linéaires 50, 52, 54 sont par exemple de type vérin.

Le module électronique 20 est électroniquement relié aux têtes de distribution 30, 40, aux organes de séchage 36 et aux actionneurs linéaires 50, 52, 54.

Le module électronique 20 comporte notamment un microprocesseur, une mémoire de programme et au moins un bus de communication. Un programme 60 est mémorisé dans le module électronique 20.

Le programme 60 est apte à intégrer un premier modèle informatique 62 de la pièce 100, ledit premier modèle informatique comprenant des coordonnées spatiales définissant la forme de ladite pièce 100. Le programme 60 est également apte à intégrer un deuxième modèle informatique 64 du support 102 de la pièce 100, ledit deuxième modèle informatique comprend des coordonnées spatiales définissant la forme du support 102.

Le programme 60 est apte à mettre en oeuvre une fabrication de la pièce 100 et du support 102 à partir des premier 62 et deuxième 64 modèles informatiques, comme décrit ci-après. Plus précisément, le programme 60 est apte à commander le fonctionnement des têtes de distribution 30, 40, des organes de séchage 36 et des actionneurs linéaires 50, 52, 54.

La pièce 100 et le support 102 décrits ci-dessus sont réalisés par un procédé de fabrication additive, ou impression 3D. Une étape d'un tel procédé de fabrication de la pièce 100 et du support 102 est notamment représentée à la figure 3. Ledit procédé, mis en oeuvre par l'installation 10 décrite ci-dessus, est décrit ci-après.

Une première phase du procédé comporte la création du premier modèle informatique 62 de la pièce 100. Ledit premier modèle informatique associe le premier matériau élastomère 16 à chaque point de la pièce 100 défini sous forme de coordonnées spatiales. Dans le mode de réalisation non représenté où l'installation 10 est apte à distribuer plusieurs matériaux élastomères, ledit premier modèle informatique associe un matériau spécifique à chaque point de la pièce 100.

Ladite première phase du procédé comporte la création du deuxième modèle informatique 64 du support 102 de la pièce 100. Ledit deuxième modèle informatique associe le deuxième matériau support 24 à chaque point du support 102 défini sous forme de coordonnées spatiales.

De préférence, les premier 62 et deuxième 64 modèles informatiques prévoient que la pièce 100 et le support 102 présentent des formes complémentaires, de sorte à être au contact l'un de l'autre à la fin du procédé de fabrication.

Les premier 62 et deuxième 64 modèles informatiques ainsi créés sont intégrés au programme 60 du module électronique 20.

De préférence, le programme 60 prévoit la décomposition de la pièce 100 et du support 102 en plusieurs couches 66, 67, 68, correspondant à des étapes successives de dépôt des premier matériau élastomère 16 et deuxième matériau support 24. Sur la figure 3, les couches 66 et 67 sont achevées et la couche 68 est en cours de réalisation.

Chaque couche 66, 67, 68 est délimitée par deux plans (X, Y) écartés d'une hauteur 69 selon Z. Les hauteurs 69 des différentes couches 66, 67, 68 peuvent être identiques ou différentes.

Préférentiellement, la hauteur 69 de chaque couche 66, 67, 68 de la pièce 100 est comprise entre 10 µm et 100 µm, plus préférentiellement comprise entre 30 µm et 70 µm et encore plus préférentiellement de l'ordre de 50 µm. La hauteur 69 est exagérée sur la figure 3.

Selon un mode de réalisation, la hauteur 69 de chaque couche 66, 67, 68 est paramétrée lors de la création des premier 62 et deuxième 64 modèles informatiques. Selon un autre mode de réalisation, la hauteur 69 des couches 66, 67, 68 est prévue par défaut dans le programme 60.

Préférentiellement, selon le programme 60, au moins une des couches 66, 67, 68 comporte une première portion 70 appartenant à la pièce 100 et une deuxième portion 72 appartenant au support 102. Lesdites première 70 et deuxième 72 portions sont au contact l'une de l'autre pour former une couche continue. Plus préférentiellement, plusieurs couches 66, 67, 68 comportent chacune une portion de la pièce 100 et une portion du support 102 au contact l'une de l'autre.

Une deuxième phase du procédé comporte le dépôt, sur la surface 26 du plateau 12, des premier matériau élastomère 16 et deuxième matériau support 24, conformément aux premier 62 et deuxième 64 modèles informatiques. Le dépôt du premier matériau élastomère 16 est déposé sous forme de micro-gouttes 86, ce qui permet une grande précision spatiale dudit dépôt.

La deuxième phase du procédé comprend plusieurs étapes successives de dépôt desdits matériaux 16, 24, chaque étape correspondant à la réalisation d'une couche 66, 67, 68. A cet effet, simultanément à la distribution de chaque matériau 16, 24, la tête de distribution 30, 40 correspondante est déplacée selon les coordonnées spatiales de chaque couche 66, 67, 68.

La deuxième phase du procédé comporte en outre des étapes de séchage alternées avec les étapes de dépôt des matériaux 16, 24 de chaque couche 66, 67, 68 formant la pièce 100. Chaque étape de séchage conduit à une évaporation au moins partielle de la base aqueuse du premier matériau élastomère 16 de la portion 70 correspondante de ladite pièce 100. Il en résulte la formation, sur ladite portion 70, d'une surface solide 74 représentée sur la figure 3 pour la couche 67. Ladite surface solide 74 est notamment apte à supporter le premier matériau élastomère 16 entrant dans la fabrication de la couche suivante 68.

De préférence, chaque étape de séchage est réalisée au moyen du ou des organes de séchage 36, par chauffage rayonnant ou par soufflage d'air chauffé ou non. Selon un mode de réalisation, le séchage est effectué par soufflage d'air chauffé entre 50 °C et 80 °C.

Pour chaque couche 66, 67, 68 comportant une première portion 70 et une deuxième portion 72 telles que décrites ci-dessus, les dépôts des matériaux 16 et 24 sont sensiblement simultanés. De préférence, pour une même couche 66, 67, 68, le matériau support 24 de la deuxième portion 72 est déposé avant le matériau élastomère 16 de la première portion 70. Ainsi, ladite deuxième portion 72 contient ledit matériau élastomère 16 et l'empêche de s'écouler avant l'étape de séchage suivante.

De manière connue dans le domaine de l'impression 3D, la présence du support 102 permet de décaler horizontalement les couches successives de premier matériau élastomère 16 pour donner une forme complexe à la pièce 100.

Dans le mode de réalisation dans lequel le premier matériau élastomère 16 comprend au moins un additif de vulcanisation, le procédé comprend éventuellement une troisième phase de vulcanisation après dépôt de la totalité des couches 66, 67, 68 formant la pièce 100. Ladite phase de vulcanisation est par exemple réalisée par cuisson dans un four (non représenté) ou par irradiation sous faisceaux d'électrons ou sous rayons UV.

Le support 102 est ensuite dissocié de la pièce 100 en élastomère ainsi obtenue.

Un exemple de mise en oeuvre du procédé ci-dessus à partir de l'installation 10 est détaillé ci-après :
Des éprouvettes de test, de forme parallélépipédique, sont réalisées à partir d'une composition aqueuse de latex naturel d'Hévéa comprenant au moins 40% en poids d'eau et entre 30% et 70% en poids de polymères.

Chaque éprouvette est réalisée par dépôts successifs de 10 couches de composition aqueuse, chaque couche ayant une surface carrée d'environ 4 mm de côté et une épaisseur d'environ 30 µm. Entre les dépôts de couches, un séchage est effectué par soufflage d'air chaud et tapis chauffant.

Dans cet exemple, le procédé ne comprend pas de dépôt d'un matériau support.

Lors de la fabrication des éprouvettes, un parfait mouillage de la surface précédente, une parfaite adhésion des couches entre elles et un parfait séchage ont été constatés.

Un cycle de cuisson de 20 minutes à 120°C est ensuite réalisé sur les éprouvettes. Des essais mécaniques ont été réalisés sur les éprouvettes fabriquées :
Caractéristique des éprouvettes :
   - Largeur = 4 mm
   - Epaisseur = 0.34 mm
Résultats :
   - Contrainte à la rupture: 13.9 MPa
   - Déformation à rupture: 710 %
   - Dureté : 30 ShA

## Revendications

1. Procédé de fabrication additive d'une pièce (100) en élastomère, comprenant les étapes suivantes :
- création d'un premier modèle informatique (62) comprenant des coordonnées spatiales de ladite pièce en élastomère ; puis
- dépôt, conformément auxdites coordonnées spatiales, d'au moins un premier matériau élastomère (16) ;
ledit dépôt étant effectué en plusieurs couches (66, 67, 68) sensiblement planes, empilées verticalement ; l'étape de création du premier modèle informatique comprenant une définition des coordonnées spatiales de chacune desdites couches de premier matériau;
- le dépôt étant effectué par formation de gouttes (86) de composition liquide et éjection sous pression desdites gouttes,
le procédé étant **caractérisé en ce que** :
- l'au moins un premier matériau élastomère est déposé sous forme d'une composition liquide à base de latex.

2. Procédé de fabrication selon la revendication 1, dans lequel l'au moins un premier matériau élastomère (16) est un caoutchouc naturel ou synthétique, la composition liquide à base de latex comprenant une dispersion de polymères dans une base aqueuse ; ladite composition liquide comprenant au moins 40% en poids d'eau et entre 30% et 70% en poids de polymères.

3. Procédé de fabrication selon la revendication 1 ou 2, dans lequel les gouttes (86) de composition liquide ont un volume compris entre 0,1 nL et 1000 nL, préférentiellement compris entre 0,25 nL et 1,00 nL et plus préférentiellement compris entre 0,40 nL et 0,60 nL.

4. Procédé de fabrication selon l'une des revendications précédentes, comprenant des étapes de séchage alternées avec les étapes de dépôt des couches d'au moins un premier matériau élastomère, chaque étape de séchage conduisant à une évaporation au moins partielle de la base aqueuse de l'une desdites couches et à la formation d'une surface solide (74) sur ladite couche, ladite surface solide étant apte à supporter la couche suivante d'au moins un premier matériau élastomère.

5. Procédé de fabrication selon l'une des revendications précédentes, comprenant les étapes suivantes :
- création d'un deuxième modèle informatique (64), comprenant des coordonnées spatiales d'un support (102) de la pièce (100) en élastomère ; puis
- dépôt, conformément auxdites coordonnées spatiales, d'au moins un deuxième matériau (24) dudit support ;
ledit dépôt étant effectué en plusieurs couches (66, 67, 68) sensiblement planes, empilées verticalement ; l'étape de création du deuxième modèle informatique comprenant une définition des coordonnées spatiales de chacune desdites couches de deuxième matériau,
chaque couche (66, 67, 68) d'au moins un deuxième matériau étant sensiblement coplanaire avec au moins une couche de premier matériau.

6. Procédé de fabrication selon la revendication 5, dans lequel l'au moins un deuxième matériau (24) est déposé avant le premier matériau (16) d'une même couche (66, 67, 68) sensiblement coplanaire.

7. Procédé de fabrication selon l'une des revendications précédentes, dans lequel :
- la composition liquide à base de latex comprend en outre au moins un additif de vulcanisation ; et
- le procédé comprend ensuite une étape de vulcanisation de l'au moins un premier matériau élastomère (16).

8. Installation (10) de fabrication additive, comprenant :
- un premier dispositif (14) de distribution d'au moins un premier matériau élastomère (16), ledit premier dispositif de distribution comprenant une tête de distribution (30) et un réservoir (32) de composition liquide (16) à base de latex, relié à ladite tête ;
- un dispositif (18) de déplacement dudit premier dispositif de distribution ;
- un module électronique (20) de gestion desdits dispositifs (14, 18) ; et
- un programme (60) mémorisé dans le module électronique pour la mise en oeuvre d'un procédé selon l'une des revendications précédentes ;
le réservoir du premier dispositif de distribution (14) étant en surpression par rapport à la pression atmosphérique ; et
la tête de distribution comprenant : un orifice d'éjection (82) communiquant avec le réservoir ; et un pointeau (84) apte à se rapprocher et s'éloigner dudit orifice d'éjection dans un mouvement oscillant, de sorte à projeter sous pression les gouttes (86) de la composition liquide hors dudit orifice d'éjection.

9. Installation de fabrication additive selon la revendication 8 prise en combinaison avec l'une des revendications 5 à 7, ladite installation comprenant en outre un deuxième dispositif (22) de distribution de l'au moins un deuxième matériau (24).

10. Installation de fabrication additive selon la revendication 8 ou la revendication 9, comprenant en outre au moins un organe de séchage (36).

## Patentansprüche

1. Verfahren zur generativen Fertigung eines Elastomerteils (100), umfassend die folgenden Schritte:
- Erstellen eines ersten Computermodells (62), das Raumkoordinaten des Elastomerteils enthält; und dann
- Aufbringen von mindestens einem ersten elastomeren Material (16), entsprechend den genannten Raumkoordinaten;
wobei die Ablagerung in mehreren im Wesentlichen ebenen, vertikal gestapelten Schichten (66, 67, 68) erfolgt; wobei der Schritt des Erstellens des ersten Computermodells eine Definition der Raumkoordinaten jeder der Schichten des ersten Materials umfasst;
- wobei das Aufbringen durch die Bildung von Tropfen (86) aus der flüssigen Zusammensetzung und das Ausstoßen dieser Tropfen unter Druck erfolgt,
wobei das Verfahren **dadurch gekennzeichnet ist, dass**:
- das mindestens eine erste elastomere Material in Form einer flüssigen Zusammensetzung auf Latexbasis aufgebracht wird.

2. Herstellungsverfahren nach Anspruch 1, wobei das mindestens eine erste elastomere Material (16) ein natürlicher oder synthetischer Kautschuk ist, wobei die flüssige Zusammensetzung auf Latexbasis eine Dispersion von Polymeren in einer wässrigen Basis umfasst; wobei die flüssige Zusammensetzung mindestens 40 Gew.-% Wasser und zwischen 30 und 70 Gew.-% Polymere umfasst.

3. Herstellungsverfahren nach Anspruch 1 oder 2, wobei die Tropfen (86) der flüssigen Zusammensetzung ein Volumen zwischen 0,1 nL und 1000 nL, vorzugsweise zwischen 0,25 nL und 1,00 nL und noch bevorzugter zwischen 0,40 nL und 0,60 nL aufweisen.

4. Herstellungsverfahren nach einem der vorhergehenden Ansprüche, umfassend Trocknungsschritte, die sich mit den Schritten des Aufbringens der Schichten aus mindestens einem ersten elastomeren Material abwechseln, wobei jeder Trocknungsschritt zu einer zumindest teilweisen Verdampfung der wässrigen Basis einer der Schichten und zur Bildung einer festen Oberfläche (74) auf dieser Schicht führt, wobei die feste Oberfläche geeignet ist, die nächste Schicht aus mindestens einem ersten elastomeren Material zu tragen.

5. Herstellungsverfahren nach einem der vorstehenden Ansprüche, ferner umfassend die folgenden Schritte:
- Erstellen eines zweiten Computermodells (64), das Raumkoordinaten eines Trägers (102) des Elastomerteils (100) umfasst; und dann
- Aufbringen von mindestens einem zweiten Material (24) des genannten Trägers, entsprechend den genannten Raumkoordinaten;
wobei das Aufbringen in mehreren im Wesentlichen ebenen, vertikal gestapelten Schichten (66, 67, 68) erfolgt; wobei der Schritt des Erstellens des zweiten Computermodells eine Definition der Raumkoordinaten jeder der Schichten des zweiten Materials umfasst,
jede Schicht (66, 67, 68) aus mindestens einem zweiten Material im Wesentlichen koplanar mit mindestens einer Schicht aus dem ersten Material ist.

6. Herstellungsverfahren nach Anspruch 5, bei dem das mindestens eine zweite Material (24) vor dem ersten Material (16) einer gleichen, im Wesentlichen koplanaren Schicht (66, 67, 68) aufgebracht wird.

7. Herstellungsverfahren nach einem der vorherigen Ansprüche, wobei:
- die flüssige Zusammensetzung auf Latexbasis außerdem mindestens ein Vulkanisationsadditiv enthält; und
- das Verfahren dann einen Schritt des Vulkanisierens des mindestens einen ersten elastomeren Materials (16) umfasst.

8. Anlage (10) zur generativen Fertigung, umfassend :
- eine erste Vorrichtung (14) zur Abgabe von mindestens einem ersten elastomeren Material (16), wobei die erste Abgabevorrichtung einen Abgabekopf (30) und einen mit dem Kopf verbundenen Behälter (32) für eine flüssige Zusammensetzung (16) auf Latexbasis umfasst;
- eine Vorrichtung (18) zum Bewegen der ersten Abgabevorrichtung;
- ein elektronisches Modul (20) zur Verwaltung der genannten Vorrichtungen (14, 18); und
- ein in dem elektronischen Modul gespeichertes Programm (60) zur Durchführung eines Verfahrens nach einem der vorhergehenden Ansprüche;
das Reservoir der ersten Abgabevorrichtung (14) unter Überdruck gegenüber dem atmosphärischen Druck; und
wobei der Abgabekopf umfasst: eine Ausstoßöffnung (82), die mit dem Behälter in Verbindung steht; und eine Nadel (84), die sich in einer oszillierenden Bewegung auf die Ausstoßöffnung zu und von dieser weg bewegen kann, um so unter Druck die Tropfen (86) der flüssigen Zusammensetzung aus der Ausstoßöffnung herauszuschleudern.

9. Anlage zur generativen Fertigung nach Anspruch 8 in Kombination mit einem der Ansprüche 5 bis 7, wobei die Anlage außerdem eine zweite Vorrichtung (22) zur Abgabe des mindestens einen zweiten Materials (24) umfasst.

10. Anlage zur generativen Fertigung nach Anspruch 8 oder Anspruch 9, die außerdem mindestens ein Trocknungsorgan (36) umfasst.

## Claims

1. Additive manufacturing method for an elastomer part (100), comprising the following steps:
- creation of a first computer model (62) comprising spatial coordinates of said elastomer part; then
- deposition, in accordance with said spatial coordinates, of at least a first elastomer material (16);
said deposition being effected in several substantially flat layers (66, 67, 68) stacked vertically; the step of creating the first computer model comprising definition of the spatial coordinates of each of said layers of first material,
the deposition being carried out by forming drops (86) of liquid composition and ejection under pressure of said drops ;
the method being **characterized in that**:
- the at least a first elastomer material is deposited in the form of a latex-based liquid composition.

2. Manufacturing method according to claim 1, wherein at least one first elastomer material (16) is a natural or synthetic rubber, the liquid latex-based composition comprising a dispersion of polymers in an aqueous base; said liquid composition comprising at least 40% by weight of water and between 30% and 70% by weight of polymers.

3. Manufacturing method according to claim 1 or 2, wherein the drops (86) of liquid composition have a volume between 0.1 nL and 1000 nL, preferably between 0.25 nL and 1.00 nL, and more preferably between 0.40 nL and 0.60 nL.

4. Manufacturing method according to one of the preceding claims, comprising alternating drying steps with the steps of depositing layers of at least a first elastomer material, each drying step leading to at least partial evaporation of the aqueous base of one of said layers and forming a solid surface (74) on said layer, said solid surface being adapted to support the next layer of at least a first elastomer material.

5. Manufacturing method according to one of the preceding claims, comprising the following steps:
- creation of a second computer model (64), comprising spatial coordinates of a support (102) of the elastomer part (100); then
- deposition, in accordance with said spatial coordinates, of at least a second material (24) of said support;
said deposition being effected in several substantially flat layers (66, 67, 68) stacked vertically; the step of creating the second computer model comprising a definition of the spatial coordinates of each of said layers of second material,
each layer (66, 67, 68) of at least one second material being substantially coplanar with at least one layer of first material.

6. Manufacturing method according to claim 5, wherein at least one second material (24) is deposited before the first material (16) of the same layer (66, 67, 68) substantially coplanar.

7. Manufacturing method according to one of the preceding claims, in which:
- the liquid latex-based composition further comprises at least one vulcanization additive; and
- the method then comprises a step of vulcanizing at least a first elastomer material (16).

8. Additive manufacturing facility (10), comprising:
- a first dispensing device (14) for dispensing at least a first elastomer material (16), said first dispensing device comprising a dispensing head (30) and a reservoir (32) of latex-based liquid composition, connected to said head ;
- a device (18) for moving said first dispensing device;
- an electronic module (20) for managing said devices (14, 18); and
- a program (60) memorized in the electronic module for implementing a method according to one of the preceding claims;
the reservoir of the first dispensing device (14) being at an overpressure relative to atmospheric pressure ; and
the dispensing head comprising: an ejection orifice (82) communicating with the reservoir; and a needle (84) designed to move towards and away from said ejection orifice in an oscillating movement, so as to project under pressure the drops (86) of the liquid composition out of said ejection orifice.

9. Additive manufacturing facility according to claim 8 taken in combination with one of claims 5 to 7, said facility further comprising a second device (22) for distributing the at least one second material (24).

10. Additive manufacturing facility according to claim 8 or claim 9, further comprising at least one drying member (36).
